# EUROPEAN PATENT SPECIFICATION

(11) **EP 2 567 810 B1**
(45) Date of publication and mention of the grant of the patent: **11.03.2015**
(21) Application number: 12183610.0
(22) Date of filing: 07.09.2012
(51) Int. Cl.: B32B 3/08, B32B 3/12, E04C 2/36, B32B 21/06

(54) **PANEL MADE OF WOOD OR ALIKE AND METHOD AND MACHINE FOR MANUFACTURING SUCH PANEL**
PLATTE AUS HOLZ ODER ÄHNLICHES UND VERFAHREN UND VORRICHTUNG ZUR HERSTELLUNG EINER SOLCHEN PLATTE
PANNEAU EN BOIS OU SIMILAIRE ET PROCEDE ET APPAREIL POUR PREPARER CE PANNEAU

(30) Priority: 09.09.2011 IT BO20110518
(43) Date of publication of application: 13.03.2013
(73) Proprietor: BIESSE S.p.A., Pesaro (IT)
(72) Inventor: Lattanzi, Lorenzo, 61100 PESARO (IT)
(74) Representative: Bergadano, Mirko

(56) References cited:
- EP-A1- 2 133 184
- GB-A- 2 000 465
- US-A- 3 826 056

## Description

The present invention relates to a panel made of wood or alike.

In the field of wood panel production, it is known to provide a panel comprising two sheets of wood or alike which are substantially flat and parallel to each other; a filling structure arranged between the two sheets and defined, normally, by a honeycomb-like paper structure; a reinforcement structure defined, normally, by slats made of wood or plastic material, which have a given thickness, and are arranged between the sheets and around at least part of the filling structure in order to guarantee greater resistance of the panel to compression at a peripheral edge thereof; and a finishing edge applied along at least part of a lateral contour of the panel.

Known panels of the above-described type have several drawbacks mainly deriving from the fact that, due to their thickness and rigidity, the aforementioned reinforcement slats strongly limit the production capacity of the machines which are normally used in the production of such panels, they result in frequent interventions by the personnel in charge of loading the reinforcement slats into the machines themselves, and do not allow, for example, the provision of panels having a shaped lateral contour comprising one or more rounded portions having relatively small curvature radii.

The object of the present invention is to provide a panel made of wood or alike which is free from the above-mentioned drawbacks.

According to the present invention, a panel made of wood or alike is provided as claimed in the claims from 1 to 9.

The present invention further relates to a method for manufacturing a panel made of wood or alike.

According to the present invention, a method for manufacturing a panel made of wood or alike is provided as claimed in the claims 10 to 17.

The present invention finally relates to a machine for manufacturing a panel made of wood or alike.

According to the present invention, a machine for manufacturing a panel made of wood or alike is provided as claimed in the claims from 18 to 23.

The present invention will now be described with reference to the accompanying drawings, which illustrate an embodiment thereof by way of non-limiting example, in which:
figure 1 is a diagrammatic plan view, with parts removed for clarity, of a preferred embodiment of the machine according to the present invention;
figure 2 diagrammatically shows successive steps of the production of a preferred embodiment of the panel of the present invention; and
figure 3 diagrammatically shows a variation of the panel in figure 2.

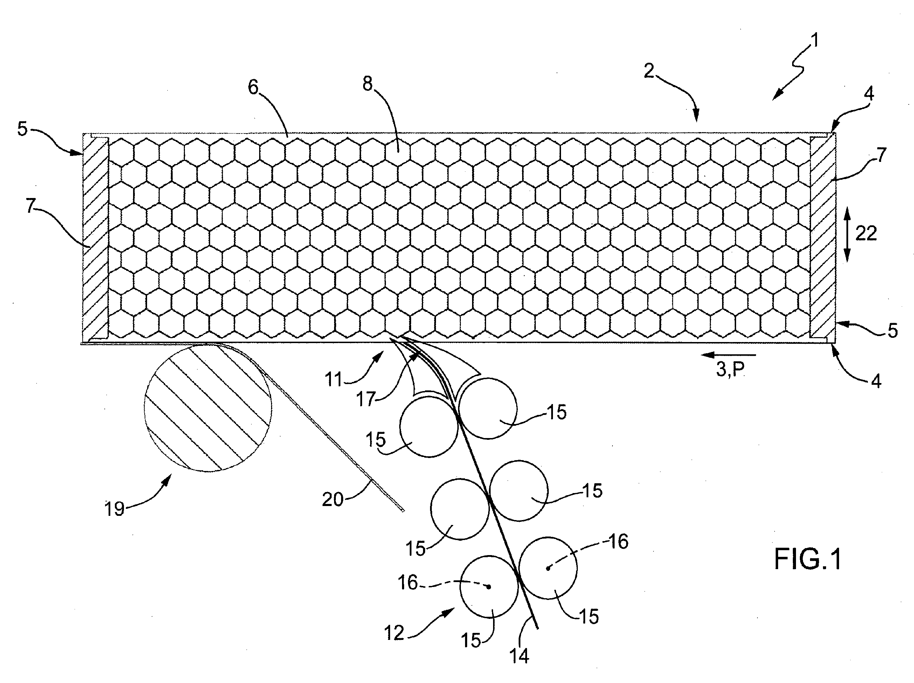

With reference to figure 1, the numeral 1 indicates, as a whole, a machine for manufacturing panels 2 made of wood or alike, each of which has, in this case, an elongated rectangular shape, extends in a direction 3, and is laterally limited by two minor faces 4 which are parallel to each other and to direction 3 and by two minor faces 5 which are parallel to each other and perpendicular to direction 3 itself.

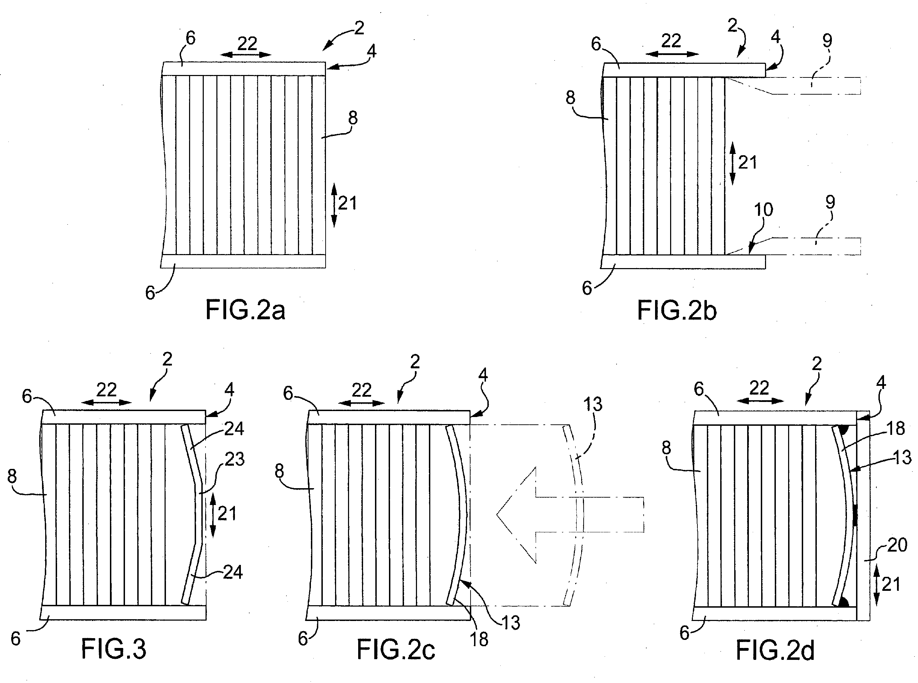

Panel 2 further comprises two sheets 6, which are made of wood or alike (figure 2a) and are substantially flat and parallel to each other and manufactured, in this case, from wood-based materials, such as materials commonly indicated with the acronyms MDF (Medium Density Foam) or HDF (High Density Foam). Panel 2 is longitudinally closed in direction 3 by two laths 7 made of wood or alike mounted between the sheets 6 transversally to direction 3, and is provided with a filling structure 8 (in this case a honeycomb-like filling structure made, for example, of cardboard) arranged between the two sheets 6 and the laths 7 and glued to the inner surfaces of the sheets 6 themselves.

According to several variations (not shown), the laths 7 are eliminated or replaced with angular elements which are made of wood or alike and arranged at the vertices of the panels 2.

Machine 1 comprises a known conveyor device (not shown) adapted to move the panels 2 forward in succession along a path P, which extends in direction 3 and through a cutting station (not shown) at which a pair of blades 9 (figure 2b) performs the cutting of a longitudinal portion of structure 8 to obtain, at one of the faces 4, a seat 10 which is parallel to direction 3 itself.

Path P further extends through an inserting station 11, at which a feeding device 12 feeds a reinforcement edge 13 between the sheets 6 and within seat 10.

Edge 13 is obtained by a tape 14 made of flexible material, which extends in a substantially vertical plane, and has a height greater than the height of structure 8 and, therefore, seat 10.

Device 12 comprises, in succession and in order, a plurality of pairs of unwinding rollers 15 mounted to rotate around respective longitudinal axes 16 which are vertical and transversal to direction 3, and a channel 17 for inserting tape 14 into seat 10.

The rollers 15 and channel 17 are shaped so as to elastically and progressively deform tape 14 around a longitudinal axis of symmetry thereof and give a transverse section 18 of edge 13 a curvilinear shape, which has, in this case, a single concavity, and faces structure 8 when tape 14 is inserted into seat 10.

Once tape 14 is inserted between the sheets 6, edge 13 is firstly arranged in contact with the sheets 6 (figure 2c) thanks to the elasticity of the curvilinear shape of transverse shape 18 and so as to also make up for possible dimensional errors of the thicknesses of the sheets 6, and is therefore glued to the inner surfaces of the sheets 6 themselves.

With regard to what is stated above, it is appropriate to specify that, in the case shown in figure 2, edge 13 is entirely comprised within seat 10.

According to several variations (not shown):
the concavity of edge 13 is opposite to structure 8;
tape 14 is bent so that section 18 has at least two concavities, of which one faces structure 8 and the other is opposite to structure 8 itself;
edge 13 is inserted between the sheets 6 so as to project outwards from seat 10; and
seat 10 is obtained by milling both the peripheral portions of the sheets 6 at the inner faces thereof, and structure 8.

Machine 1 further comprises an edgebanding assembly 19 of the known type mounted downstream of inserting station 11 in direction 3 for gluing a finishing edge 20 onto the considered face 4, i.e. on the laths 7, the sheets 6, and edge 13 (figure 2d).

From what is described above, it therefore follows that reinforcement edge 13 gives the peripheral portions of the sheets 6 a relatively high resistance to compression in a vertical direction 21 which is parallel to the axes 16 and gives finishing edge 20 a relatively high resistance to compression in a horizontal direction 22 which is orthogonal to the directions 3 and 21.

The variation shown in figure 3 differs from what is shown in the preceding figures solely in that the rollers 15 and channel 17 are shaped so as to elastically and progressively deform tape 14 and give the transverse section 18 of edge 13 a polygonal shape, which has a single concavity, and faces structure 8 when tape 14 is inserted into seat 10.

Transverse section 18 comprises a central portion 23 which is substantially flat and parallel to the faces 4 and is adapted to guarantee a relatively large supporting surface for finishing edge 20, and an upper and a lower portion 24, which are bent with respect to portion 23, and are adapted to be arranged in contact with the sheets 6 thanks to the elasticity of the polygonal shape of transverse section 18 itself.

The flexibility and the relatively small thickness of tape 14 allow the use of reels (not shown) provided with relatively high quantities of tape 14, therefore ensure to machine 1 a relatively high production capacity between two replacement operations of the reels (not shown) themselves, and allow machine 1 to process panels 2 having shaped lateral contours comprising rounded portions with relatively small curvature radii.

## Claims

1. A panel made of wood or alike and comprising two sheets (6), which are made of wood or alike and are substantially flat and parallel to each other; a filling structure (8), which is arranged between the sheets (6) themselves; and a reinforcement edge (13), which is mounted between the sheets (6) and around at least part of the filling structure (8); and **characterized in that** the reinforcement edge (13) presents a bent transverse section (18) arranged in contact with each sheet (6).

2. A panel according to claim 1, wherein the transverse section (18) presents a curved or polygonal shape.

3. A panel according to claim 1 or 2, wherein the reinforcement edge (13) is glued to each sheet (6).

4. A panel according to any of the previous claims, wherein the transverse section (18) presents a concavity facing the filling structure (8).

5. A panel according to any of the claims from 1 to 3, wherein the transverse section (18) presents a concavity which is opposite to the filling structure (8).

6. A panel according to any of the previous claims, wherein the reinforcement edge (13) is bent so as to present a single concavity.

7. A panel according to any of the claims from 1 to 5, wherein the reinforcement edge (13) is bent so as to present at least two concavities opposite to each other.

8. A panel according to any of the previous claims and comprising, furthermore, a finishing edge (20), which is glued to each sheet (6) and to the reinforcement edge (13) along at least part of a lateral contour of the panel itself.

9. A panel according to any of the previous claims and comprising, furthermore, a seat (10) for the reinforcement edge (13), which is obtained only in correspondence to the filling structure (8) or is obtained in correspondence to both the inner faces of the sheets (6) and the filling structure (8).

10. A method for manufacturing a panel (2) made of wood or alike and comprising two sheets (6), which are made of wood or alike and are substantially flat and parallel to each other, and a filling structure (8), which is arranged between the sheets (6) themselves, the method being **characterized in that** it comprises the step of:
inserting, between the sheets (6) and around at least part of the filling structure (8), a reinforcement edge (13) presenting a bent transverse section (18) arranged in contact with each sheet (6).

11. A method according to claim 10 and comprising, furthermore, the step of:
bending the reinforcement edge (13) starting from an initial flat configuration, so as to give its transverse section (18) a curved or polygonal configuration.

12. A method according to claim 10 or 11 and comprising, furthermore, the step of:
elastically deforming the reinforcement edge (13) starting from an initial flat configuration, in order to give its transverse section (18) a bent configuration.

13. A method according to any of the claims from 10 to 12 and comprising, furthermore, the step of:
removing part of the filling structure (8), so as to define a seat (10) for the reinforcement edge (13).

14. A method according to any of the claims from 10 to 13 and comprising, furthermore, the step of:
glueing the reinforcement edge (13) to each sheet (6).

15. A method according to any of the claims from 10 to 14, wherein the reinforcement edge (13) is inserted between the sheets (6) so as to be entirely comprised between the sheets (6) or to project outwards from the sheets (6) themselves.

16. A method according to any of the claims from 10 to 15 and comprising, furthermore, the step of:
gluing a finishing edge (20) to each sheet (6) and to the reinforcement edge (13) along at least part of a lateral contour of the panel (2).

17. A method according to any of the claims from 10 to 16 and comprising, furthermore, the step of:
cutting only the filling structure (8) or both the inner faces of the sheets (6) and the filling structure (8), in order to obtain a seat (10) for the reinforcement edge (13).

18. A machine for manufacturing a panel (2) made of wood or alike and comprising two sheets (6), which are made of wood or alike and are substantially flat and parallel to each other, and a filling structure (8), which is arranged between the sheets (6) themselves, the machine being **characterized in that** it comprises a feeding device (12) for inserting, between the sheets (6) and around at least part of the filling structure (8), a reinforcement edge (13) presenting a bent transverse section (18) arranged in contact with each sheet (6).

19. A machine according to claim 18, wherein the feeding device (12) comprises at least a pair of feeding rollers (15), which cooperate with each other so as to bend the reinforcement edge (13) starting from an initial flat configuration and to give the transverse section (18) a curved or polygonal configuration.

20. A machine according to claim 19, wherein the feeding rollers (15) are shaped so as to elastically deform the reinforcement edge (13).

21. A machine according to any of the claims from 18 to 20 and comprising, furthermore, a gluing device for gluing the reinforcement edge (13) to each sheet (6).

22. A machine according to any of the claims from 18 to 21 and comprising, furthermore, an edgebanding assembly (19) for gluing a finishing edge (20) to each sheet (6) and to the reinforcement edge (13) along at least part of a lateral contour of the panel.

23. A machine according to any of the claims from 18 to 22 and comprising, furthermore, a cutting device (9), which is shaped so as to only cut the filling structure (8) or so as to cut both the inner faces of the sheets (6) and the filling structure (8), in order to obtain a seat (10) for the reinforcement edge (13).

## Patentansprüche

1. Platte aus Holz oder dergleichen, umfassend zwei Tafeln (6), die aus Holz oder dergleichen hergestellt sind und im Wesentlichen flach und parallel zueinander verlaufen; eine Füllungsstruktur (8), die zwischen den Tafeln (6) angeordnet ist, sowie eine Verstärkungskante (13), die zwischen den Tafeln (6) montiert ist und wenigstens teilweise um die Füllungsstruktur (8) herumläuft, **dadurch gekennzeichnet, dass** die Verstärkungskante (13) einen gebogenen Querabschnitt (18) bildet, der mit jeder Tafel (6) in Kontakt steht.

2. Platte nach Anspruch 1, wobei der Querabschnitt (18) eine gekrümmte oder polygonale Gestalt hat.

3. Platte nach Anspruch 1 oder 2, wobei die Verstärkungskante (13) jeder Tafel (6) verleimt ist.

4. Platte nach einem der vorausgegangenen Ansprüche, wobei der Querabschnitt (18) einen konkaven Verlauf aufweist, der der Füllungsstruktur (8) zugewandt ist.

5. Platte nach einem der Ansprüche 1 bis 3, wobei der Querabschnitt (18) einen konkaven Verlauf aufweist, der der Füllungsstruktur (8) gegenüberliegt.

6. Platte nach einem der vorausgegangenen Ansprüche, wobei die Verstärkungskante (13) derart gebogen ist, dass sie eine einzige Konkavität aufweist.

7. Platte nach einem der Ansprüche 1 bis 5, wobei die Verstärkungskante (13) derart gebogen ist, dass sie wenigstens zwei einander gegenüberliegende Konkavitäten umfasst.

8. Platte nach einem der vorausgegangenen Ansprüche, weiterhin umfassend eine Finishing-Kante (20), die mit jeder Tafel (6) sowie mit der Verstärkungskante (13) entlang wenigstens eines Teiles einer seitlichen Kontur der Platte selbst verleimt ist.

9. Platte nach einem der vorausgegangenen Ansprüche, weiterhin umfassend einen Sitz (10) für die Verstärkungskante (13), allein erzielt entsprechend der Füllungsstruktur (8), oder entsprechend den Innenflächen der Tafeln (6) und der Füllungsstruktur (8).

10. Verfahren zum Herstellen einer Platte (2) aus Holz oder dergleichen, umfassend zwei Tafeln (6), die aus Holz oder dergleichen hergestellt sind und im Wesentlichen flach und parallel zueinander verlaufen, und einer Füllungsstruktur (8), die zwischen den Tafeln (6) angeordnet ist, wobei das Verfahren **gekennzeichnet ist durch** die folgenden Verfahrensschritte:
Einführen einer Verstärkungskante (13) zwischen die Tafeln (6) und um wenigstens einen Teil der Füllungsstruktur (8), um einen gebogenen Querabschnitt (18) in Kontakt mit jeder Tafel (6) zu bilden.

11. Verfahren nach Anspruch 10, weiterhin umfassend:
Biegen der Versteifungskante (13), ausgehend von einer flachen Konfiguration, um dessen Querabschnitt (18) eine gebogene oder polygonale Konfiguration zu verleihen.

12. Verfahren nach Anspruch 10 oder 11, weiterhin umfassend den folgenden Verfahrensschritt:
elastisches Verformen der Verstärkungskante (13), ausgehend von einer flachen Konfiguration, um dessen Querabschnitt (18) eine gebogene Konfiguration zu verleihen.

13. Verfahren nach einem der Ansprüche 10 bis 12, weiterhin umfassend den folgenden Verfahrensschritt:
Entfernen eines Teiles der Füllungsstruktur (8), um einen Sitz (10) für die Verstärkungskante (13) zu schaffen.

14. Verfahren nach einem der Ansprüche 10 bis 13, weiterhin umfassend den folgenden Verfahrensschritt:
Verleimen der Verstärkungskante (13) mit jeder Tafel (6).

15. Verfahren nach einem der Ansprüche 10 bis 14, wobei die Verstärkungskante (13) zwischen die Tafeln (6) eingefügt wird, um vollständig zwischen den Tafeln (6) eingeschlossen zu sein oder um von den Tafeln (6) nach außen vorzuragen.

16. Verfahren nach einem der Ansprüche 10 bis 15, weiterhin umfassend den folgenden Verfahrensschritt:
Verleimen einer Finishing-Kante (20) mit jeder Tafel (6) und der Verstärkungskante (13) entlang wenigstens eines Teiles der Seitenkontur der Platte.

17. Verfahren nach einem der Ansprüche 10 bis 16, weiterhin umfassend den folgenden Verfahrensschritt:
Schneiden lediglich der Füllungsstruktur (8) oder der Innenflächen der Tafeln (6) und der Füllungsstruktur (8), um einen Sitz (10) für die Verstärkungskante (13) zu schaffen.

18. Maschine zum Herstellen einer Platte (2) aus Holz oder dergleichen, umfassend zwei Tafeln (6), die aus Holz oder dergleichen hergestellt sind und im Wesentlichen flach und parallel zueinander verlaufen, und eine Füllungsstruktur (8), die zwischen den Tafeln (6) angeordnet ist, wobei die Maschine **dadurch gekennzeichnet** ist, dass sie eine Zufuhreinrichtung (12) zum Einführen einer Verstärkungskante (13) zwischen die Tafeln (6) und um wenigstens einen Teil der Füllungsstruktur (8) umfasst, wobei eine Verstärkungskante (13) einen gebogenen Querabschnitt (18) bildet, der in Kontakt mit jeder Tafel (6) steht.

19. Maschine nach Anspruch 18, wobei die Zufuhreinrichtung (12) wenigstens ein Paar Zufuhrrollen (15) umfasst, die miteinander zusammenarbeiten, um die Verstärkungskante (13) zu biegen, ausgehend von einer flachen Konfiguration, und um dem Querabschnitt (18) eine gebogene oder polygonale Konfiguration zu verleihen.

20. Maschine nach Anspruch 19, wobei die Zufuhrrollen (15) derart gestaltet sind dass sie die Verstärkungskante (13) elastisch verformen.

21. Maschine nach einem der Ansprüche 18 bis 20, weiterhin umfassend eine Verleimungseinrichtung, um die Verstärkungskante (13) mit jeder Tafel (6) zu verleimen.

22. Maschine nach einem der Ansprüche 18 bis 21, weiterhin umfassend eine Umleimereinrichtung (19) zum Verleimen einer Finishing-Kante (20) mit jeder Tafel (6) und der Verstärkungskante (13) entlang wenigstens eines Teiles der Seitenkontur der Platte.

23. Maschine nach einem der Ansprüche 18 bis 22, weiterhin umfassend eine Schneideinrichtung (9), die derart gestaltet ist, dass sie lediglich die Füllungsstruktur (8) schneidet oder die Innenflächen und die Tafeln (6) sowie die Füllungsstruktur (8), um einen Sitz (10) für die Verstärkungskante (13) zu schaffen.

## Revendications

1. Panneau composé de bois ou similaire comprenant deux feuilles (6), qui sont composées de bois ou similaire et sont sensiblement plates et parallèles l'une à l'autre ; une structure de remplissage (8), qui est agencée entre les feuilles (6) elles-mêmes ; et un bord de renforcement (13), qui est monté entre les feuilles (6) et autour d'au moins une partie de la structure de remplissage (8) ; et **caractérisé en ce que** le bord de renforcement (13) présente une section transversale courbée (18) agencée en contact avec chaque feuille (6).

2. Panneau selon la revendication 1, dans lequel la section transversale (18) présente une forme incurvée ou polygonale.

3. Panneau selon la revendication 1 ou 2, dans lequel le bord de renforcement (13) est collé à chaque feuille (6).

4. Panneau selon l'une quelconque des revendications précédentes, dans lequel la section transversale (18) présente une concavité faisant face à la structure de remplissage (8).

5. Panneau selon l'une quelconque des revendications 1 à 3, dans lequel la section transversale (18) présente une concavité qui est en regard de la structure de remplissage (8).

6. Panneau selon l'une quelconque des revendications précédentes, dans lequel le bord de renforcement (13) est courbé de manière à présenter une seule concavité.

7. Panneau selon l'une quelconque des revendications 1 à 5, dans lequel le bord de renforcement (13) est courbé de manière à présenter au moins deux concavités en regard l'une de l'autre.

8. Panneau selon l'une quelconque des revendications précédentes et comprenant, en outre, un bord de finition (20), qui est collé à chaque feuille (6) et au bord de renforcement (13) le long d'au moins une partie d'un contour latéral du panneau lui-même.

9. Panneau selon l'une quelconque des revendications précédentes et comprenant, en outre, un siège (10) pour le bord de renforcement (13), qui est obtenu uniquement en correspondance avec la structure de remplissage (8) ou est obtenu en correspondance avec à la fois les faces internes des feuilles (6) et la structure de remplissage (8).

10. Méthode de fabrication d'un panneau (2) composé de bois ou similaire comprenant deux feuilles (6), qui sont composées de bois ou similaire et sont sensiblement plates et parallèles l'une à l'autre, et une structure de remplissage (8), qui est agencée entre les feuilles (6) elles-mêmes, la méthode étant **caractérisée en ce qu'**elle comprend l'étape suivante :
- l'insertion, entre les feuilles (6) et autour d'au moins une partie de la structure de remplissage (8), d'un bord de renforcement (13) présentant une section transversale courbée (18) agencée en contact avec chaque feuille (6).

11. Méthode selon la revendication 10 et comprenant, en outre, l'étape suivante :
- la courbure du bord de renforcement (13) depuis une configuration plate initiale de manière à donner à sa section transversale (18) une configuration incurvée ou polygonale.

12. Méthode selon la revendication 10 ou 11 et comprenant, en outre, l'étape suivante :
- la déformation élastique du bord de renforcement (13) depuis une configuration plate initiale afin de donner à sa section transversale (18) une configuration courbée.

13. Méthode selon l'une quelconque des revendications 10 à 12 et comprenant, en outre, l'étape suivante :
- le retrait d'une partie de la structure de remplissage (8) de manière à définir un siège (10) pour le bord de renforcement (13).

14. Méthode selon l'une quelconque des revendications 10 à 13 et comprenant, en outre, l'étape suivante :
- le collage du bord de renforcement (13) sur chaque feuille (6).

15. Méthode selon l'une quelconque des revendications 10 à 14, dans laquelle le bord de renforcement (13) est inséré entre les feuilles (6) de manière à être entièrement compris entre les feuilles (6) ou à faire saillie vers l'extérieur depuis les feuilles (6) elles-mêmes.

16. Méthode selon l'une quelconque des revendications 10 à 15 et comprenant, en outre, l'étape suivante :
- le collage d'un bord de finition (20) à chaque feuille (6) et au bord de renforcement (13) le long d'au moins une partie d'un contour latéral du panneau (2).

17. Méthode selon l'une quelconque des revendications 10 à 16 et comprenant, en outre, l'étape suivante :
- la découpe uniquement de la structure de remplissage (8) ou à la fois des faces internes des feuilles (6) et de la structure de remplissage (8), afin d'obtenir un siège (10) pour le bord de renforcement (13).

18. Machine pour la fabrication d'un panneau (2) composé de bois ou similaire comprenant deux feuilles (6), qui sont composées de bois ou similaire et sont sensiblement plates et parallèles l'une à l'autre, et une structure de remplissage (8), qui est agencée entre les feuilles (6) elles-mêmes, la machine étant **caractérisée en ce qu'**elle comprend un dispositif d'alimentation (12) pour l'insertion, entre les feuilles (6) et autour d'au moins une partie de la structure de remplissage (8), d'un bord de renforcement (13) présentant une section transversale courbée (18) agencée en contact avec chaque feuille (6).

19. Machine selon la revendication 18, dans laquelle le dispositif d'alimentation (12) comprend au moins une paire de rouleaux d'alimentation (15), qui coopèrent l'un avec l'autre de manière à courber le bord de renforcement (13) depuis une configuration plate initiale et à donner à la section transversale (18) une configuration incurvée ou polygonale.

20. Machine selon la revendication 19, dans laquelle les rouleaux d'alimentation (15) sont formés de manière à déformer élastiquement le bord de renforcement (13).

21. Machine selon l'une quelconque des revendications 18 à 20 et comprenant, en outre, un dispositif de collage pour coller le bord de renforcement (13) sur chaque feuille (6).

22. Machine selon l'une quelconque des revendications 18 à 21 et comprenant, en outre, un ensemble d'application d'un bord de protection (19) pour coller un bord de finition (20) à chaque feuille (6) et au bord de renforcement (13) le long d'au moins une partie d'un contour latéral du panneau.

23. Machine selon l'une quelconque des revendications 18 à 22 et comprenant, en outre, un dispositif de coupe (9), qui est formé de manière à couper uniquement la structure de remplissage (8) ou de manière à couper à la fois les faces internes des feuilles (6) et la structure de remplissage (8), afin d'obtenir un siège (10) pour le bord de renforcement (13).
